# FASCICULE DE BREVET EUROPEEN

(11) **EP 1 323 618 B1**
(45) Date de publication et mention de la délivrance du brevet: **06.10.2004**
(21) Numéro de dépôt: 02293140.6
(22) Date de dépôt: 18.12.2002
(51) Int. Cl.: B62D 1/04, B62D 1/10

(54) **Ensemble de direction de véhicule**
Lenkeinrichtung eines Fahrzeuges
Vehicle steering assembly

(30) Priorité: 20.12.2001 FR 0116515
(43) Date de publication de la demande: 02.07.2003
(73) Titulaire: Peugeot Citroen Automobiles, 92200 Neuilly Sur Seine (FR)
(72) Inventeur: Bailleux, François, 91400 Val d'Albian (FR)
(74) Mandataire: Timoney, Ian Charles Craig

(56) Documents cités:
- US-A- 4 485 371
- US-A- 4 604 912

## Description

La présente invention se rapporte à un ensemble de direction d'un véhicule.

De manière conventionnelle, un ensemble de direction de véhicule, plus particulièrement d'une voiture, comprend une colonne de direction à une extrémité de laquelle est monté fixe un volant. Le volant comprend un moyeu central autour duquel est disposé un anneau destiné à être tenu par le conducteur. Le moyeu central est typiquement muni de commandes, par exemple des interrupteurs, destinées à être actionnées manuellement par le conducteur.

Le moyeu central du volant peut également être muni d'un système de sécurité tel un sac gonflable, plus communément appelé « air bag ».

Le fait que le moyeu tourne avec le volant oblige les fabricants de sacs gonflables à leur donner une forme symétrique par rapport à leur centre afin qu'ils puissent agir de façon sûre quel que soit l'angle du volant. Néanmoins, il serait préférable, pour un fonctionnement optimal du sac, de lui donner une forme asymétrique, mais cela oblige le constructeur à le monter sur un moyeu fixe disposé à l'intérieur du volant qui, lui, est libre en rotation.

On connaît du document US 4 561 324 un ensemble de direction dans lequel le moyeu du volant est agencé afin de rester fixe pendant que le volant est libre en rotation avec la colonne de direction. Le moyeu peut recevoir un sac gonflable qui peut avantageusement avoir une forme asymétrique.

On connaît également du document US 4 604 912 un ensemble de direction muni d'un moyeu de volant fixe qui comporte diverses commandes destinées à être actionnées manuellement.

Ce type d'ensemble présente des inconvénients dans la mesure où lors d'une rotation du volant, les commandes disposées sur le moyeu fixe ne se trouvent plus à la portée des doigts du conducteur, ce qui l'oblige à les chercher visuellement, quittant la route des yeux pendant ce temps.

On connaît enfin du document US 4 485 371 un ensemble de direction du type défini dans le préambule de la revendication 1, dans lequel la rotation du moyeu est d'une amplitude inférieure à celle du volant.

La demanderesse s'est fixé pour objectif de surmonter les difficultés et les inconvénients rencontrés dans l'art antérieur en proposant un ensemble de direction qui assure que les commandes disposées sur le moyeu du volant se trouvent toujours à la portée des doigts du conducteur, et ce quel que soit l'angle du volant, et qui permet de monter un sac gonflable de forme optimale.

Pour atteindre cet objectif, l'ensemble de direction selon l'invention est caractérisé en ce que les moyens pour mettre le moyeu en rotation avec la colonne de direction sont agencés pour faire tourner le moyeu dans le même sens que le volant jusqu'à un angle prédéterminé de celui-ci, une rotation du volant au delà de l'angle prédéterminé ne provoquant pas de rotation additionnelle du moyeu.

De préférence, les moyens pour mettre le moyeu en rotation sont montés sur le volant.

Avantageusement, le volant et le moyeu ont une position de repos commune, les moyens pour mettre le moyeu en rotation avec la colonne de direction étant agencés, lors d'une rotation du volant au delà de l'angle prédéterminé, pour faire revenir le moyeu vers sa position de repos.

De préférence, les moyens fonctionnels comprennent un sac gonflable de sécurité ou des commandes.

D'autres caractéristiques et avantages de la présente invention vont maintenant être décrits de manière plus détaillée à l'aide des dessins annexés donnés à titre illustratif et non limitatif et dans lesquels :
- la Figure 1 est une section schématique d'un ensemble de direction selon l'art antérieur;
- la Figure 2 est une section schématique d'un ensemble de direction selon l'invention;
- les Figures 3a, 3b et 3c sont chacune une vue schématique d'un ensemble de volant selon un premier mode de réalisation de l'invention;
- les Figures 4a, 4b et 4c sont chacune une vue schématique d'un ensemble de volant selon un deuxième mode de réalisation de l'invention ; et
- la figure 5 est un logigramme illustrant des moyens permettant la mise en oeuvre de l'invention.

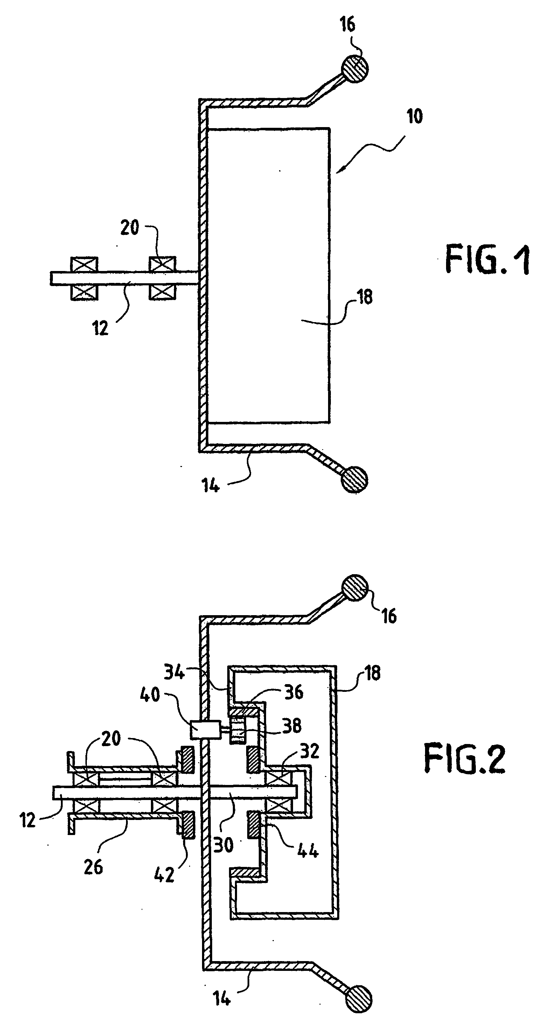

Sur la Figure 1 est représenté schématiquement un ensemble de direction 10 de construction conventionnelle. Cet ensemble comprend une colonne de direction 12 à une extrémité de laquelle est monté fixe un volant 14 formé d'un anneau 16, destiné à être tenu par un conducteur, disposé autour d'un moyeu 18. La colonne est libre en rotation par rapport à la structure du véhicule (non représentée) grâce aux roulements 20. Le moyeu 18 est muni d'un sac gonflable qui, afin qu'il puisse agir de façon sûre quel que soit l'angle du volant, a une forme symétrique par rapport à son centre.

La Figure 2 représente l'ensemble de direction selon l'invention. Les éléments de cet ensemble qui sont communs avec l'ensemble de la Figure 1 portent les mêmes chiffres de référence. Les éléments fixes sont représentés par des lignes pointillées.

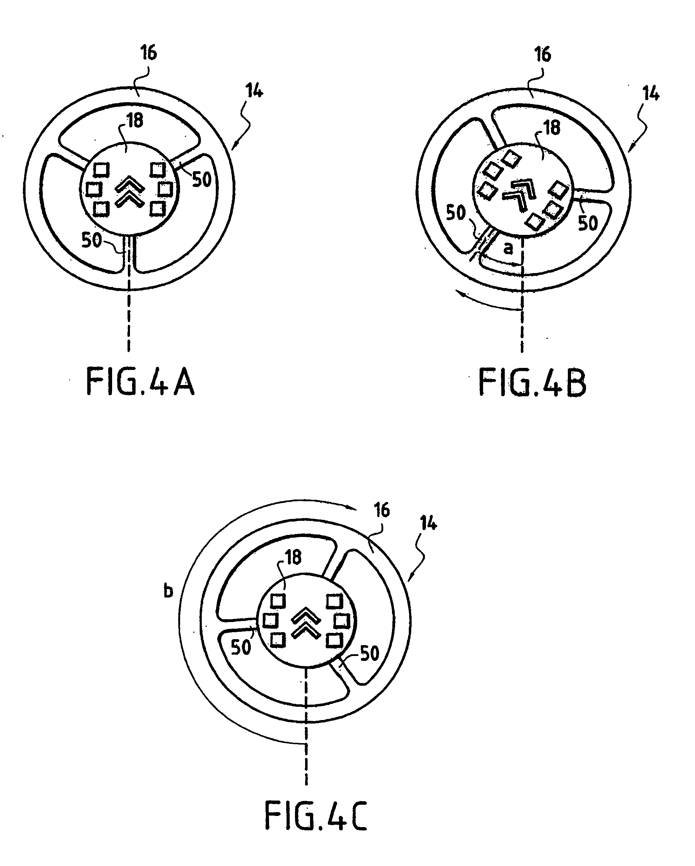

Comme représentée sur la figure 2, 4a colonne de direction 12, montée sur la structure 26 du véhicule au moyen de roulements 20, comporte une prolongement 30 faisant saillie à l'intérieur du volant 14 et muni d'un roulement 32. Le moyeu 18 est monté sur le prolongement 30 au moyen du roulement 32 ce qui lui rend libre en rotation par rapport au volant 14.

Le fond 34 du moyeu 18 disposé vers l'intérieur du volant 14 est formé avec une couronne 36 agencée pour coopérer avec un pignon 38 disposé sur un moteur d'asservissement 40 qui est monté sur le volant 14. Ainsi, une rotation du moteur d'asservissement provoque une rotation relative entre le moyeu 18 et le volant 14.

Un premier capteur de position 42, monté sur la structure 26 du véhicule permet de déterminer la position angulaire de la colonne de direction 12 et, donc, du volant 14. Un deuxième capteur de position 44, monté sur le fond 34 du moyeu 18 permet de déterminer la position angulaire du moyeu relatif au volant 14. Un calculateur, non représenté, envoie des signaux de commandes au moteur d'asservissement 40 en fonction des données fournies pas les capteurs de position 42 et 44.

Selon un aspect de invention, lorsque le volant est mis en rotation dans un sens, le moyeu est également mis en rotation dans le même sens et à la même vitesse que le volant, jusqu'à ce que le moyeu atteigne un angle prédéterminé par rapport à la position de repos de l'ensemble de direction. Le moyeu est ensuite maintenu dans cette position quel que soit l'angle pris par le volant au delà de cet angle. De préférence, l'angle prédéterminé est 30°, mais cet angle peut se situer entre 10 et 45° environ. Une fois que le volant revient à l'angle prédéterminé, et continue de se tourner vers sa position de repos, le moyeu se met à tourner de nouveau avec le volant afin de maintenir les commandes disposées sur le moyeu à la portée des doigts du conducteur.

Selon un mode de réalisation alternatif de l'invention, lorsque le volant est mis en rotation au delà de l'angle prédéterminé, le moyeu suit le mouvement du volant jusqu'à l'angle prédéterminé, puis se met à se tourner en sens inverse pour revenir dans sa position de repos, et ce quel que soit l'angle du volant au delà de l'angle prédéterminé.

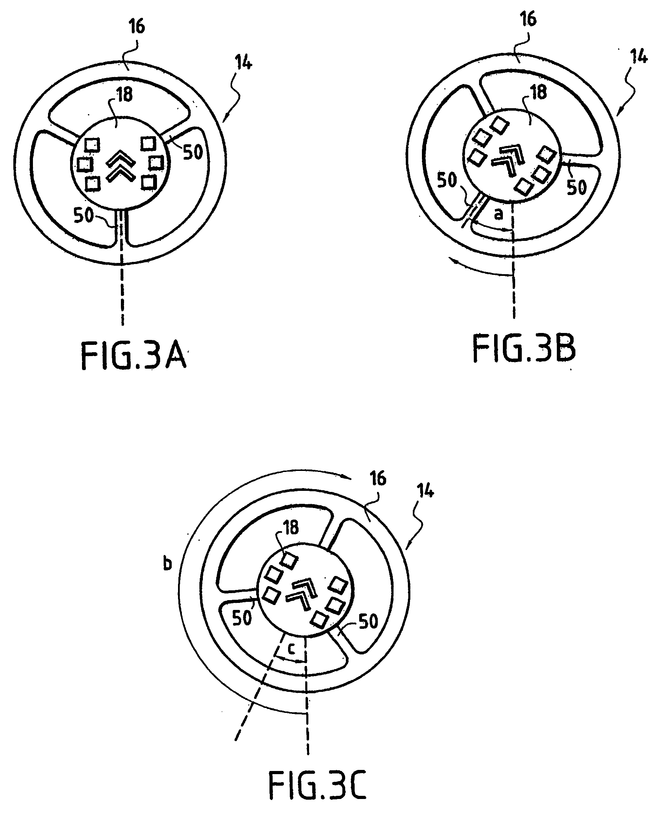

La Figure 3 illustre le fonctionnement du premier mode de réalisation de l'invention. Sur la figure 3a sont représentés le volant 14 et le moyeu 18 dans leur position de repos commun. Dans l'exemple illustré, le volant est muni de trois branches 50.

La Figure 3b illustre le volant et le moyeu dans une position commune lorsque le volant a été tourné à travers un angle *a* qui est égale ou inférieur à l'angle prédéterminé. Le moteur d'asservissement 40, commandé par le calculateur, fait tourner le moyeu 18 en même temps, et à travers le même angle, que le volant de manière à compenser le mouvement du volant par rapport au moyeu. Sur la Figure 3c est représenté le volant 14 après avoir été tourné à travers un angle *b* supérieur à l'angle prédéterminé. Le moyeu 18 est maintenu par le moteur d'asservissement à l'angle prédéterminé *c* par rapport à sa position de repos, malgré l'angle pris au delà par le volant. Dans cette position les commandes disposées sur le moyeu 18 sont toujours à la portée des doigts du conducteur et le sac gonflable reste dans une position optimale.

La Figure 4 illustre le fonctionnement du second mode de réalisation de l'invention. Sur la figure 4a sont représentés le volant 14 et le moyeu 18 dans leur position de repos commune. La Figure 4b illustre le volant et le moyeu dans une position commune, c'est à dire lorsque le volant a été tourné à travers un angle *a* qui est égale ou inférieur à l'angle prédéterminé. Le moteur d'asservissement 40, commandé par le calculateur, oblige le moyeu 18 à tourner en même temps, et à travers le même angle, que le volant. Sur la Figure 4c est représenté le volant 14 après avoir été tourné à travers un angle *b* supérieur à l'angle prédéterminé. Le moyeu 18 est repositionné lentement dans sa position de repos par le moteur d'asservissement, position qu'il gardera jusqu'à ce que le volant revienne dans sa propre position de repos. Comme dans l'exemple de la Figure 3, dans cette position les commandes disposées sur le moyeu 18 sont toujours à la portée des doigts du conducteur et le sac gonflable reste dans une position optimale.

De manière alternative, le moyeu peut être mis en rotation par rapport au volant par un moteur électrique relié à une courroie passant autour du moyeu, ou par des engrenages.

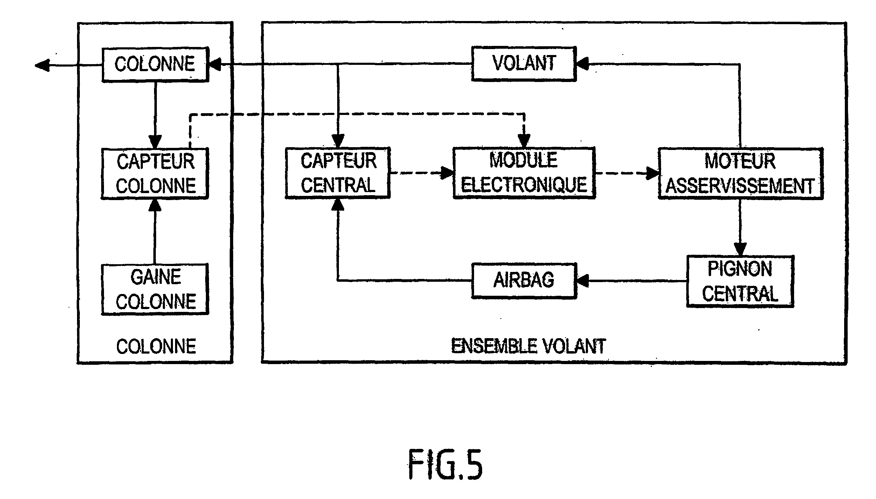

La figure 5 est un logigramme illustrant la relation entre les composants de l'ensemble de direction selon l'invention.

Comme représenté sur la Figure 5, lorsque le volant et le moyeu tournent avec le même angle et la même vitesse de rotation, la rotation des branches du volant est détectée par le capteur colonne qui mesure l'angle entre la colonne et la structure du véhicule 26. Cet angle est envoyé au module électronique, celui-ci donne un ordre au moteur d'asservissement 40 afin de faire tourner le moyeu par l'intermédiaire de la couronne 36 et le pignon 46, jusqu'a obtenir le même angle sur les capteurs de position 42 et 44.

Lorsque le volant est tourné au-delà de l'angle prédéterminé, le moyeu est maintenu immobile. La rotation des branches du volant est détectée par le capteur colonne qui mesure 1 angle entre la colonne et la structure 26 du véhicule. Lorsque cet angle est supérieur à l'angle prédéterminé le module électronique bloque la rotation du moteur d'asservissement 41 afin que le moyeu soit fixe. Lorsque l'angle volant réduit en dessous de l'angle prédéterminé, le dispositif repasse dans le mode précédent.

La présente invention offre un ensemble de direction nécessitant peu de modifications à la structure du volant et du moyeu, mais qui assure que les touches de commande soient toujours à la portée des doigts du conducteur et permet d'offrir une forme optimale au sac gonflable de sécurité. De plus, il offre une forme libre au moyeu et au volant.

## Revendications

1. Ensemble de direction d'un véhicule comprenant une colonne de direction (12) a une extrémité de laquelle est monté fixé un volant (14) et un moyeu (18) adjacent au volant mais libre en rotation par rapport à celui-ci et comprenant des moyens fonctionnels, l'ensemble comprenant de plus des moyens pour mettre le moyeu (18) en rotation avec la colonne de direction (12) et agencés, lors d'une rotation du volant, pour faire tourner le moyeu dans le même sens que le volant, **caractérisé en ce que** lesdits moyens (36, 38, 40) pour mettre le moyeu (18) en rotation sont agencés pour faire tourner le moyeu (18) dans le même sens que le volant (14) jusqu'à un angle prédéterminé de celui-ci, une rotation du volant au delà de l'angle prédéterminé ne provoquant pas de rotation additionnelle du moyeu (18).

2. Ensemble selon la revendication 1 **caractérisé en ce que** les moyens pour mettre le moyeu (18) en rotation sont montés sur le volant (14).

3. Ensemble selon la revendication 1 **caractérisé en ce que** les moyens pour mettre le moyeu (18) en rotation sont montés sur le moyeu.

4. Ensemble selon l'une des revendication 1 à 3 **caractérisé en ce que** le volant (14) et le moyeu (18) ont une position de repos commune, les moyens pour mettre le moyeu en rotation avec la colonne de direction (12) étant agencés, lors d'une rotation du volant au delà de l'angle prédéterminé, pour faire revenir le moyeu (18) vers sa position de repos.

5. Ensemble selon l'une des revendication 1 à 3 **caractérisé en ce que** les moyens pour mettre le moyeu (18) en rotation avec la colonne de direction comprennent un ensemble de pignons (38).

6. Ensemble selon la revendication 5 **caractérisé en ce que** l'ensemble comprend de plus un capteur (42) de la position angulaire du volant ainsi qu' un capteur (44) de la position angulaire du moyeu.

7. Ensemble selon l'une des revendication 1 à 6 **caractérisé en ce que** les moyens fonctionnels comprennent un sac gonflable de sécurité ou des commandes.

8. Ensemble selon l'une des revendication précédentes **caractérisé en ce que** les moyens pour mettre le moyeu en rotation comprennent un moteur électrique (40).

## Patentansprüche

1. Lenkeinrichtung eines Fahrzeugs mit einer Lenksäule (12), an deren einem Ende ein Lenkrad (14) und angrenzend eine gegenüber dem Lenkrad frei drehbare Nabe (18) fest montiert sind, und mit Funktionsmitteln, wobei die Einrichtung außerdem Mittel zum Drehen der Nabe (18) mit der Lenksäule (12) umfasst, die so angeordnet sind, dass beim Drehen des Lenkrads die Nabe in der gleichen Richtung wie das Lenkrad gedreht wird, **dadurch gekennzeichnet, dass** die Mittel (36, 38, 40) zum Drehen der Nabe (18) so angeordnet sind, dass die Nabe (18) in der gleichen Richtung wie das Lenkrad (14) bis zu einem vorher festgelegten Winkel von diesem gedreht wird, wobei ein Drehen des Lenkrads über den vorher festgelegten Winkel hinaus kein zusätzliches Drehen der Nabe (18) bewirkt.

2. Einrichtung nach Anspruch 1, **dadurch gekennzeichnet, dass** die Mittel zum Drehen der Nabe (18) am Lenkrad (14) montiert sind.

3. Einrichtung nach Anspruch 1, **dadurch gekennzeichnet, dass** die Mittel zum Drehen der Nabe (18) an der Nabe montiert sind.

4. Einrichtung nach einem der Ansprüche 1 bis 3, **dadurch gekennzeichnet, dass** das Lenkrad (14) und die Nabe (18) eine gemeinsame Ruhestellung besitzen, wobei die Mittel zum Drehen der Nabe mit der Lenksäule (12) so angeordnet sind, dass die Nabe (18) beim Drehen des Lenkrads über den vorher festgelegten Winkel hinaus in ihre Ruhestellung zurückgebracht wird.

5. Einrichtung nach einem der Ansprüche 1 bis 3, **dadurch gekennzeichnet, dass** die Mittel zum Drehen der Nabe (18) mit der Lenksäule eine Ritzel-Einheit (38) aufweisen.

6. Einrichtung nach Anspruch 5, **dadurch gekennzeichnet, dass** die Einheit außerdem einen Sensor (42) für die Winkelposition des Lenkrads sowie einen Sensor (4) für die Winkelposition der Nabe aufweist.

7. Einrichtung nach einem der Ansprüche 1 bis 6, **dadurch gekennzeichnet, dass** die Funktionsmittel einen Airbag oder Steuerungen aufweisen.

8. Einrichtung nach einem der vorhergehenden Ansprüche, **dadurch gekennzeichnet, dass** die Mittel zum Drehen der Nabe einen Elektromotor (40) umfassen.

## Claims

1. Steering assembly of a vehicle comprising a steering column (12), at one end of which is mounted, so as to be fixed, a steering wheel (14) and a hub (18) adjacent to the steering wheel but free to rotate with respect thereto and comprising functional means, the assembly (10) further comprising means for setting the hub (18) in rotation with the steering column (12) and arranged, at the time of a rotation of the steering wheel, so as to cause the hub to turn in the same direction as the steering wheel, **characterised in that** said means (36, 38, 40) for setting the hub (18) in rotation are arranged so as to cause the hub (18) to turn in the same direction as the steering wheel (14), as far as a predetermined angle thereof, a rotation of the steering wheel beyond the predetermined angle not causing an additional rotation of the hub (18).

2. Assembly according to Claim 1 **characterised in that** the means for setting the hub (18) in rotation are mounted on the steering wheel (14).

3. Assembly according to Claim 1 **characterised in that** the means for setting the hub (18) in rotation are mounted on the hub.

4. Assembly according to one of Claims 1 to 3 **characterised in that** the steering wheel (14) and the hub (18) have a common rest position, the means for setting the hub in rotation with the steering column (12) being arranged, at the time of a rotation of the steering wheel beyond the predetermined angle, so as to cause the hub (18) to return to its rest position.

5. Assembly according to one of Claims 1 to 3 **characterised in that** the means for setting the hub (18) in rotation with the steering column comprise a set of pinions (38).

6. Assembly according to Claim 5 **characterised in that** the assembly further comprises a sensor (42) of the angular position of the steering wheel and also a sensor (44) of the angular position of the hub.

7. Assembly according to one of Claims 1 to 6 **characterised in that** the functional means comprise an inflatable safety bag or controls.

8. Assembly according to one of the preceding claims **characterised in that** the means for setting the hub in rotation comprise an electric motor (40).
